# EUROPEAN PATENT APPLICATION

(11) **EP 2 590 449 A1**
(43) Date of publication of application: **08.05.2013**
(21) Application number: 11866135.4
(22) Date of filing: 21.06.2011
(51) Int. Cl.: H04W 48/18

(54) **METHOD, APPARATUS AND SYSTEM FOR ESTABLISHING COMMUNICATION**

(71) Applicant: Huawei Technologies Co., Ltd., Shenzhen, Guangdong 518129 (CN)
(72) Inventor: LIU, Sheng, Shenzhen Guangdong 518129 (CN)
(74) Representative: Thun, Clemens
(86) International application number: PCT/CN2011/076013
(87) International publication number: WO 2012/159282

(57) **Abstract**

The embodiments of the present invention provide a method, an apparatus and a system for establishing communication. The method includes: determining a selection strategy of a wireless access network for establishing communication with a terminal; selecting the wireless access network for establishing communication with the terminal according to the determined selection strategy; and establishing communication between the terminal and the wireless access network according to the signal types supported by the wireless access network and the terminal. The present invention selects the wireless access network for establishing communication with the terminal according to the determined selection strategy, which limits the wireless access network for establishing communication with the terminal, thereby solving the problem in the prior art that the terminal can only passively establish communication with the wireless access network which can establish communication, and promoting the terminal to initiatively select the wireless access network to establish communication therewith.

## Description

### Field of the Invention

The present invention relates to the field of communication technology, and particularly, to a method, an apparatus and a system for establishing communication.

### Background of the Invention

The 3G/LTE cellular network and the WiFi hot network may provide high-speed wireless broadband access for terminals having corresponding access modules, thereby achieving convenient Internet access. With the continuous increase of the types of the terminals, the types of the wireless access networks for providing Internet access for the terminals also increases continuously. Thus attention is gradually paid to the technical problem of how to determine an access network that establishes communication with a terminal, and how to establish communication between the terminal and the access network, when there are multiple available access networks.

In the prior art, there is no technical solution for solving the above technical problem.

### Summary of the Invention

In order to determine an access network for establishing communication with a terminal, and establish communication between the terminal and the access network, the embodiment of the present invention provides a method for establishing communication, comprising:
determining a selection strategy of a wireless access network for establishing communication with a terminal;
selecting the wireless access network for establishing communication with the terminal according to the determined selection strategy; and
establishing communication between the terminal and the wireless access network according to the signal types supported by the wireless access network and the terminal.

The embodiment of the present invention provides an apparatus for establishing communication, comprising:
a selection strategy determination module configured to determine a selection strategy of a wireless access network for establishing communication with a terminal;
a wireless access network determination module configured to select the wireless access network for establishing communication with the terminal according to the determined selection strategy; and
a communication establishment module configured to establish communication between the terminal and the wireless access network according to the signal types supported by the wireless access network and the terminal.

The embodiment of the present invention provides a system for establishing communication, comprising a terminal, at least two wireless access networks and an apparatus for establishing communication, wherein:
the apparatus for establishing communication is configured to determine, in at least two wireless access networks, a selection strategy of a wireless access network for establishing communication with the terminal; select the wireless access network for establishing communication with the terminal according to the determined selection strategy; and establish communication between the terminal and the wireless access network according to the signal types supported by the wireless access network and the terminal.

The embodiments of the present invention select the wireless access network for establishing communication with the terminal according to the determined selection strategy, which limits the wireless access network for establishing communication with the terminal, thereby solving the problem in the prior art that the terminal can only passively establish communication with the wireless access network which can establish communicaton, and promoting the terminal to initiatively select the wireless access network to establish communication. In addition, the embodiments of the present invention establish communication between the terminal and the wireless access network according to the signal types supported by the wireless access network and the terminal, thus the terminal can establish communication with the wireless access network meeting the selection strategy.

### Brief Description of the Drawings

In order to more clearly describe the technical solutions of the embodiments of the present invention or the prior art, the drawings to be used in the descriptions of the embodiments or the prior art are briefly introduced as follows. Obviously, the following drawings just illustrate some embodiments of the present invention, and a person skilled in the art can obtain other drawings from these drawings without paying a creative effort.
Fig. 1 is a flowchart of a method for establishing communication provided by Embodiment 1 of the present invention;
Fig. 2 is a flowchart of a method for establishing communication provided by Embodiment 2 of the present invention;
Fig. 3 is a schematic diagram of a signal conversion provided by Embodiment 2 of the present invention;
Fig. 4 is a schematic diagram of another signal conversion provided by Embodiment 2 of the present invention;
Fig. 5 is a flowchart of a method for establishing communication provided by Embodiment 3 of the present invention;
Fig. 6 is a schematic diagram of a signal conversion provided by Embodiment 3 of the present invention;
Fig. 7 is a structure diagram of an apparatus for establishing communication provided by Embodiment 4 of the present invention;
Fig. 8 is a structure diagram of an apparatus for establishing communication provided by Embodiment 5 of the present invention; and
Fig. 9 is a structure diagram of a system for establishing communication provided by an embodiment of the present invention.

### Detailed Description of the Preferred Embodiments

In order to make the objects, technical solutions and advantages of the present invention be clearer, the technical solutions of the embodiments of the present invention will be clearly and completely described as follows with reference to the drawings. Apparently, the described embodiments are just a part of embodiments of the present invention rather than all the embodiments. Based on the embodiments of the present invention, any other embodiment obtained by a person skilled in the art without paying a creative effort will fall within the protection scope of the present invention.

### Embodiment 1

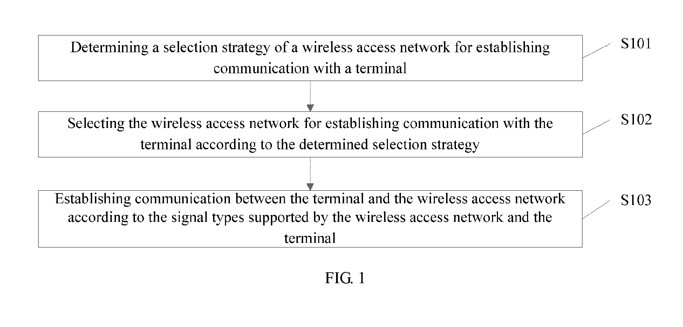

Fig. 1 is a flowchart of a method for establishing communication according to the present invention, and the method includes:
S101: determining a selection strategy of a wireless access network for establishing communication with a terminal.

In this step, the selection strategy is preferably to select a wireless access network currently having the strongest signal, or a wireless access network supporting a signal of the same type as the signal transmitted and received by the terminal, as the wireless access network for establishing communication with the terminal.
S102: selecting the wireless access network for establishing communication with the terminal according to the determined selection strategy.
S103: establishing communication between the terminal and the wireless access network according to the signal types supported by the wireless access network and the terminal.

The embodiment of the present invention selects the wireless access network for establishing communication with the terminal according to the determined selection strategy, which limits the wireless access network for establishing communication with the terminal, thereby solving the problem in the prior art that the terminal can only passively establish communication with the wireless access network which can establish communication, and promoting the terminal to initiatively select the wireless access network to establish communication. In addition, the embodiment of the present invention establishes communication between the terminal and the wireless access network according to the signal types supported by the wireless access network and the terminal, so the terminal can establish communication with the access network meeting the selection strategy.

### Embodiment 2

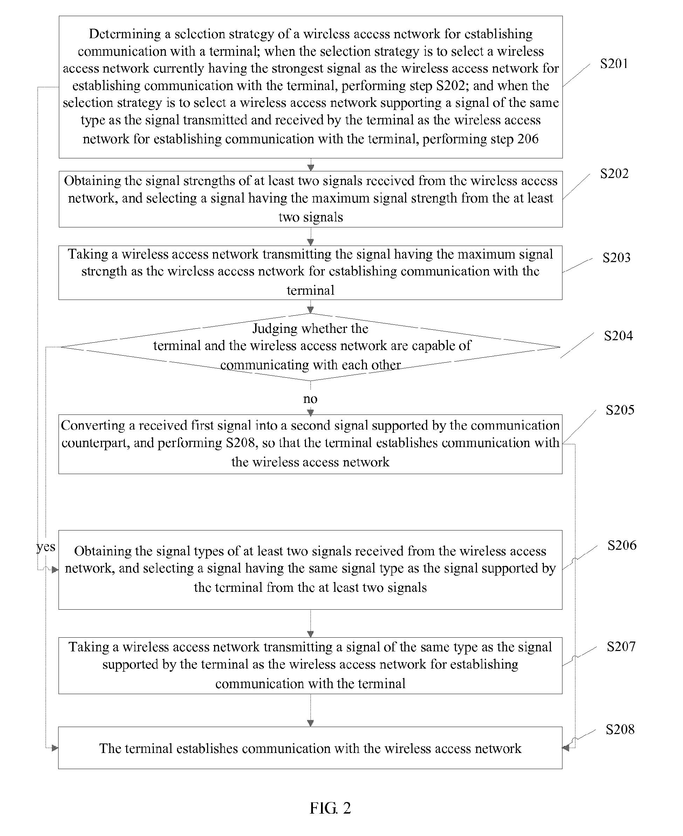

Fig. 2 is a flowchart of another method for establishing communication provided by Embodiment 2 of the present invention. On the basis of Embodiment 1, this embodiment is described with an example which takes a selection strategy of selecting a wireless access network currently having the strongest signal as the wireless access network for establishing communication with the terminal. The method specifically includes:
S201: determining a selection strategy of a wireless access network for establishing communication with a terminal.

In this step, the selection strategy of the wireless access network may be selecting a wireless access network currently having the strongest signal, or a wireless access network supporting a signal of the same type as the signal transmitted and received by the terminal, to establish communication with the terminal.

For example, when the terminal used by the user supports 3G/LTE cellular signals, while the 3G/LTE cellular signals are weak indoors (e.g., house, office, etc.) and those places provide WiFi network to be accessed, the selection strategy of the access network for establishing communication with the terminal is to select a access network currently having the strongest signal as the access network for establishing communication with the terminal. When the user does not require a high communication speed, a access network supporting a signal of the same type as the signal transmitted and received by the terminal may be selected as the access network for establishing communication with the terminal.

Specifically, when the selection strategy is to select a wireless access network currently having the strongest signal as the wireless access network for establishing communication with the terminal, step S202 is performed; and when the selection strategy is to select a wireless access network supporting a signal of the same type as the signal transmitted and received by the terminal as the wireless access network for establishing communication with the terminal, step 206 is performed.

S202: when the selection strategy is to select a wireless access network currently having the strongest signal as the wireless access network for establishing communication with the terminal, obtaining the signal strengths of at least two signals received from the wireless access network, and selecting a signal having the maximum signal strength from the at least two signals.

Specifically, obtaining the signal strengths of the at least two signals received from the wireless access network and selecting a signal having the maximum signal strength from the at least two signals may be carried out by capturing and parsing the signals transmitted by the wireless access network. A person skilled in the art can obtain the signal strength of the received signal through the prior art, and herein is omitted.

By selecting the wireless access network currently having the strongest signal as the wireless access network for establishing communication with the terminal, the communication between the terminal and the wireless access network will not be influenced by the outside because the signal transmitted and received by the wireless access network has a high strength, thereby ensuring the stability of communication between the terminal and the wireless access network.

S203: taking the wireless access network transmitting the signal having the maximum signal strength as the wireless access network for establishing communication with the terminal.

For example, assuming that when signals transmitted by two wireless access networks are received, corresponding signal strengths of the signals obtained by parsing are 1 and 2, respectively, wherein the wireless access network corresponding to signal strength 1 is a 3G/LTE cellular network, and the wireless access network corresponding to signal strength 2 is a WiFi network, thus the WiFi network is selected as the wireless access network for establishing communication with the terminal according to the determined selection strategy of the wireless access network.

S204: judging whether the terminal and the wireless access network are capable of communicating with each other.

In this step, since the terminal and the wireless access network capable of communicating with each other shall support the same signal type, the terminal and the wireless access network can communicate with each other only when they support the same signal type. Thus this step judges whether the terminal and the access network can normally communicate with each other by judging whether the type of signal transmitted and received by the terminal is the same as the type of signal transmitted and received by the access network. That is, it is judged that the terminal and the access network can normally communicate with each other when the type of signal transmitted and received by the terminal is the same as the type of signal transmitted and received by the access network; and it is judged that the terminal and the access network cannot normally communicate with each other when the type of signal transmitted and received by the terminal is different from the type of signal transmitted and received by the access network.

For example, when the terminal supports the signal type of 3G/LTE cellular signal, while the wireless access network establishing communication with the terminal determined in S203 is a WiFi network supporting WiFi signal, it can be known that the type of signal transmitted and received by the terminal is different from the type of signal transmitted and received by the wireless access network, thus it is judged that the terminal and the wireless access network cannot normally communicate with each other.

S205: when the terminal and the access network cannot communicate with each other, converting a received first signal into a second signal supported by the communication counterpart, and performing S208, so that the terminal establishes communication with the wireless access network.

Optionally, the first signal is 3G/LTE cellular signal, and the second signal is WiFi signal. Or the first signal is WiFi signal and the second signal is 3G/LTE cellular signal.

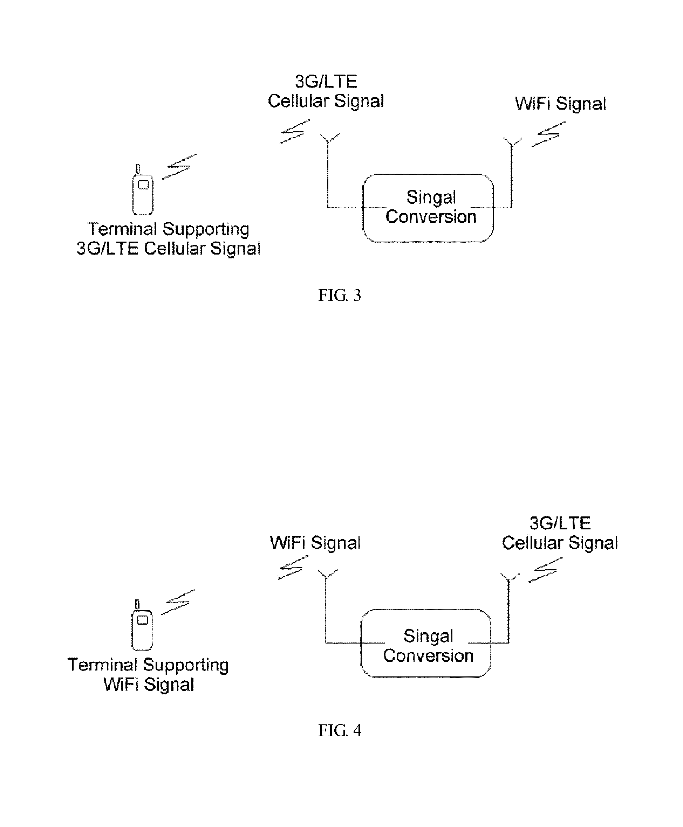

For example, as illustrated in Fig. 3, in case the signal supported by the terminal is a 3G/LTE cellular signal and the signal supported by the wireless access network is WiFi signal, after the WiFi signal transmitted by the wireless access network is received, it is converted into the 3G/LTE cellular signal supported by the terminal, then the 3G/LTE cellular signal is transmitted to the terminal, so as to establish communication between the terminal and the wireless access network.

In the scenario as illustrated in Fig. 3, for the terminal user, typically the cell phone, the execution apparatus of the present method functions as Femto, and connects to the network using WiFi. The typical application of this situation is the scenario of indoor places such as house and office where the 3G/LTE signal is weak and WiFi AP is usually available for access. Since the execution apparatus of the method does not depend on the fixed broadband interface such as ADSL, it can be conveniently placed near the terminal user, thus the path loss caused by the through-wall of Femoto signal is avoided, and a low transmitting power can be used, thereby greatly reducing the interference on the macro cell.

As illustrated in Fig. 4, in case the terminal supports the WiFi signal and the wireless access network supports the 3G/LTE cellular signal, after the 3G/LTE cellular signal transmitted by the wireless access network is received, it is converted into the WiFi signal supported by the terminal, then the WiFi signal is transmitted to the terminal, so as to establish communication between the terminal and the wireless access network.

In the scenario illustrated in Fig. 4, for the terminal user, typically the portable device having WiFi interface such as iPad, the execution apparatus of the method functions as WiFi AP and can provide the terminal user with wireless broadband access.

It is clear that through the conversion of the transmitted and received signals, the embodiment establishes communication between the terminal and the access network which support different signals, so that the terminal and the access network can communicate with each other when the communication signal supported by the terminal currently used by the user is different from that supported by the current access network.

To be noted, when the signals transmitted and received by the terminal and the access network pertain to the same type, the terminal and the access network can normally communicate with each other. Subsequent normal communication steps belong to the prior art, and herein are omitted.

S206: when the selection strategy is to select a wireless access network supporting a signal of the same type as the signal transmitted and received by the terminal as the wireless access network for establishing communication with the terminal, obtaining the signal types of at least two signals received from the wireless access network, and selecting a signal having the same signal type as the signal supported by the terminal from the at least two signals.

Specifically, the types of the signals transmitted by the wireless access network can be obtained by capturing and parsing the signals transmitted by the wireless access network. A person skilled in the art can obtain the types of the signals transmitted by the wireless access network through the prior art, and herein is omitted.

By selecting the wireless access network supporting a signal of the same type as the signal transmitted and received by the terminal as the wireless access network for establishing communication with the terminal, the communication between the terminal and the wireless access network does not need a signal conversion, thereby improving the communication efficiency between the terminal and the access network.

S207: taking a wireless access network transmitting the signal of the same type as the signal supported by the terminal as the wireless access network for establishing communication with the terminal, and performing step S208.

For example, assuming that when signals transmitted by two wireless access networks are received, corresponding signal types obtained by parsing are 3G/LTE cellular signal and WiFi signal. Thus when the terminal supports the 3G/LTE cellular signal, the 3G/LTE cellular network transmitting the 3G/LTE cellular signal is determined as the wireless access network for establishing communication with the terminal according to the determined selection strategy of the wireless access network.

S208: the terminal establishes communication with the wireless access network.

In this step, when the terminal and the wireless access network support the same signal type, or the signal supported by the access network is converted to the signal supported by the terminal through a signal conversion, the terminal and the access network can normally communicate with each other. The subsequent normal communication steps belong to the prior art, and herein are omitted.

The embodiment of the present invention selects the wireless access network for establishing communication with the terminal according to the determined selection strategy, which limits the wireless access network for establishing communication with the terminal, thereby solving the problem in the prior art that the terminal can only passively establish communication with the wireless access network which can establish communication, and promoting the terminal to initiatively select the wireless access network to establish communication. In addition, the embodiment of the present invention establishes communication between the terminal and the wireless access network according to the signal types supported by the wireless access network and the terminal, so the terminal can establish communication with the wireless access network meeting the selection strategy.

### Embodiment 3

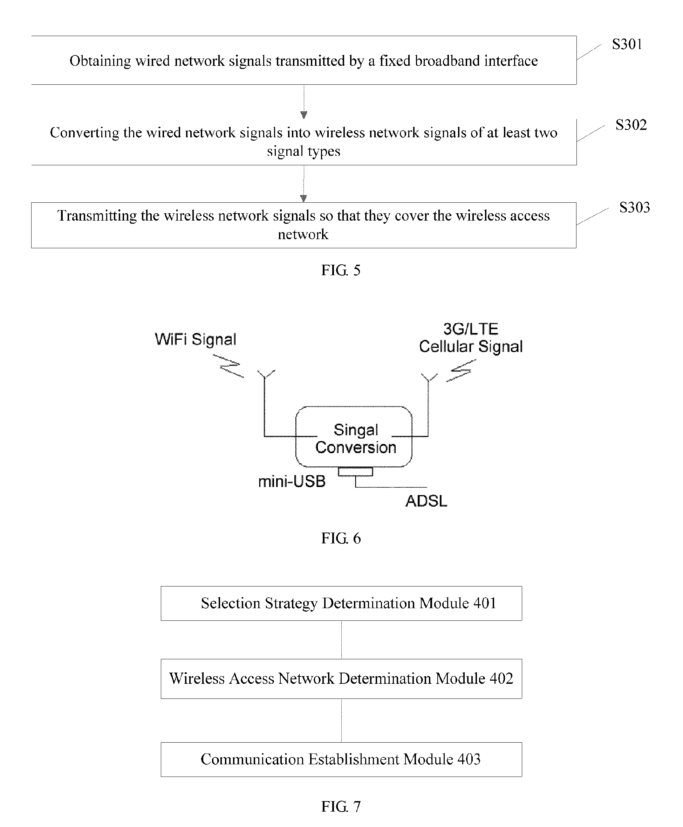

Fig. 5 is a flowchart of another method for establishing communication of the present invention. This embodiment includes S301∼S311, in which S304∼S311 are the same as S201∼S208 in Embodiment 2, and herein are omitted. S301∼S303 of this embodiment are specifically described as follows.

S301: obtaining wired network signals transmitted by a fixed broadband interface.

Preferably, the wired network signals transmitted by the fixed broadband interface may be wired network signals obtained through the ADSL fixed broadband interface. Optionally, a fixed broadband interface having an USB interface is connected through an interface such as USB or mini-USB, and a connection is made to the network through the fixed broadband interface, thus the wired network signals transmitted by the fixed broadband interface can be obtained.

S302: converting the wired network signals into wireless network signals of at least two signal types.

S303: transmitting the wireless network signals so that they cover a wireless access network.

For example, as illustrated in Fig. 6, the wired network signals obtained through the ADSL fixed broadband interface are converted into 3G/LTE cellular signals and WiFi signals, so that the region covered by the 3G/LTE cellular signals forms a 3G/LTE cellular wireless access network, and the region covered by the WiFi signals forms a WiFi wireless access network. The terminal may determine a wireless access network for establishing communication therewith according to the network type supported by the terminal and the selection strategy of the access network.

The embodiment of the present invention selects the wireless access network for establishing communication with the terminal according to the determined selection strategy, which limits the wireless access network for establishing communication with the terminal, thereby solving the problem in the prior art that the terminal can only passively establish communication with the wireless access network which can establish communication, and promoting the terminal to initiatively select the wireless access network to establish communication. In addition, the embodiment of the present invention establishes communication between the terminal and the wireless access network according to the signal types supported by the wireless access network and the terminal, so the terminal can establish communication with the wireless access network meeting the selection strategy. Further, by converting the wired network signals into wireless network signals of at least two signal types, the terminal can move within a large scope, thereby increasing the terminal usage flexibility and improving the user's terminal usage experience.

### Embodiment 4

Fig. 7 is a structure diagram of an apparatus for establishing communication of the present invention, which is mainly used to implement the method for establishing communication provided by Embodiment 1, and the apparatus includes:
a selection strategy determination module 401 configured to determine a selection strategy of a wireless access network for establishing communication with a terminal;
a wireless access network determination module 402 configured to select the wireless access network for establishing communication with the terminal according to the determined selection strategy;
a communication establishment module 403 configured to establish communication between the terminal and the wireless access network according to the signal types supported by the wireless access network and the terminal.

The embodiment of the present invention selects the wireless access network for establishing communication with the terminal according to the determined selection strategy, which limits the wireless access network for establishing communication with the terminal, thereby solving the problem in the prior art that the terminal can only passively establish communication with the wireless access network which can establish communication, and promoting the terminal to initiatively select the wireless access network to establish communication. In addition, the embodiment of the present invention establishes communication between the terminal and the wireless access network according to the signal types supported by the wireless access network and the terminal, so the terminal can establish communication with the wireless access network meeting the selection strategy.

### Embodiment 5

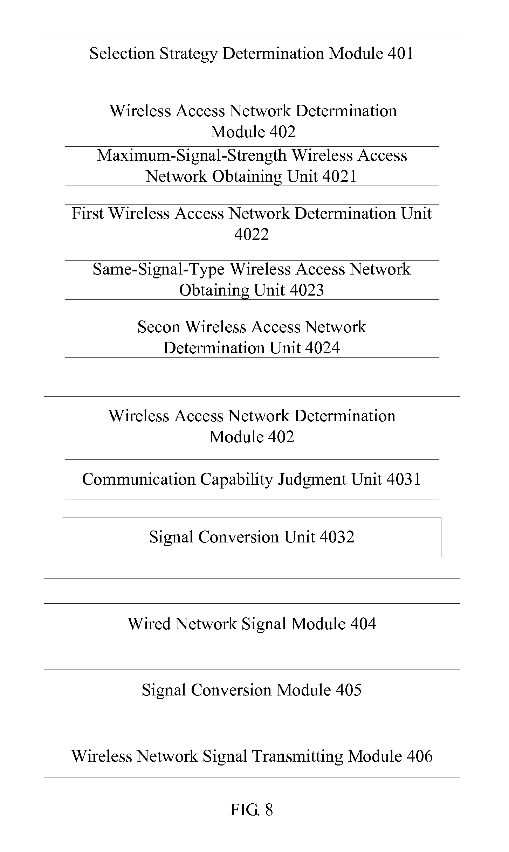

Fig. 8 is a structure diagram of another apparatus for establishing communication of the present invention, which is mainly used to implement the methods for establishing communication provided by Embodiments 1 to 3, and the apparatus includes the selection strategy determination module 401, the wireless access network determination module 402 and the communication establishment module 403 in Embodiment 4.

Further, when the selection strategy in the selection strategy determination module 401 is to select a wireless access network currently having the strongest signal as the wireless access network for establishing communication with the terminal, the wireless access network determination module 402 specifically includes:
a maximum-signal-strength wireless access network obtaining unit 4021 configured to obtain the signal strengths of at least two signals received from the wireless access network, and select a signal having the maximum signal strength from the at least two signals; and
a first wireless access network determination unit 4022 configured to take a wireless access network transmitting the signal having the maximum signal strength as the wireless access network for establishing communication with the terminal.

Correspondingly, if the apparatus includes the maximum-signal-strength wireless access network obtaining unit 4021 and the first wireless access network determination unit 4022, the communication establishment module 403 specifically includes:
a communication capability judgment unit 4031 configured to judge whether the terminal and the wireless access network are capable of communicating with each other;
a signal conversion unit 4032 configured to convert a received first signal into a second signal supported by the communication counterpart when the terminal and the wireless access network cannot communicate with each other, so that the terminal establishes communication with the wireless access network;
when the transmitting end of the received first signal is the terminal, the counterpart is the wireless access network;
when the transmitting end of the received first signal is the wireless access network, the counterpart is the terminal;
wherein the first signal is a 3G/LTE cellular signal, and the second signal is a WiFi signal; or
the first signal is a WiFi signal, and the second signal is a 3G/LTE cellular signal.

By selecting the wireless access network currently having the strongest signal as the wireless access network for establishing communication with the terminal, the communication between the terminal and the wireless access network will not be influenced by the outside because the signal transmitted and received by the wireless access network has a high strength, thereby ensuring the stability of communication between the terminal and the wireless access network.

Returning to the scenario as illustrated in Fig. 3, for the terminal user, typically the cell phone, the apparatus functions as Femto, wherein the signal conversion unit 4032 may have the function of a WiFi Station in one embodiment, and connect to the network using WiFi. The typical application of this situation is the scenario of indoor places such as house and office where the 3G/LTE signal is weak and WiFi AP is usually available for access. Since the apparatus does not depend on the fixed broadband interface such as ADSL, it can be conveniently placed near the terminal user, thus the path loss caused by the through-wall of Femto signal is avoided, and a low transmitting power can be used, thereby greatly reducing the interference on the macro cell.

In the scenario illustrated in Fig. 4, for the terminal user, typically the portable device having WiFi interface such as iPad, the apparatus functions as WiFi AP, wherein the signal conversion unit 4032 may have the function of WiFi AP in one embodiment, and provide the terminal user with wireless broadband access.

Further, when the selection strategy in the selection strategy determination module 401 is to select a wireless access network supporting a signal of the same type as the signal transmitted and received by the terminal as the wireless access network for establishing communication with the terminal, the wireless access network determination module 402 specifically includes:
a same-signal-type wireless access network obtaining unit 4023 configured to obtain the signal types of at least two signals received from the wireless access network, and select a signal having the same signal type as the signal supported by the terminal from the at least two signals;
a second wireless access network determination unit 4024 configured to take a wireless access network transmitting the signal of the same type as the signal supported by the terminal as the wireless access network for establishing communication with the terminal.

By selecting the wireless access network supporting a signal of the same type as the signal transmitted and received by the terminal as the wireless access network for establishing communication with the terminal, the communication between the terminal and the wireless access network does not need a signal conversion, thereby improving the communication efficiency between the terminal and the wireless access network.

Further, the apparatus further includes:
a wired network signal module 404 configured to obtain wired network signals transmitted by a fixed broadband interface;
a signal conversion module 405 configured to convert the wired network signals into wireless network signals of at least two signal types; and
a wireless network signal transmitting module 406 configured to transmit the wireless network signals so that they cover a wireless access network.

By converting the wired network signals into wireless network signals of at least two signal types, the terminal can move within a large scope, thereby increasing the terminal usage flexibility and improving the user's terminal usage experience.

The embodiment of the present invention selects the wireless access network for establishing communication with the terminal according to the determined selection strategy, which limits the wireless access network for establishing communication with the terminal, thereby solving the problem in the prior art that the terminal can only passively establish communication with the wireless access network which can establish communication, and promoting the terminal to initiatively select the wireless access network to establish communication. In addition, the embodiment of the present invention establishes communication between the terminal and the wireless access network according to the signal types supported by the wireless access network and the terminal, so the terminal can establish communication with the wireless access network meeting the selection strategy.

### Embodiment 6

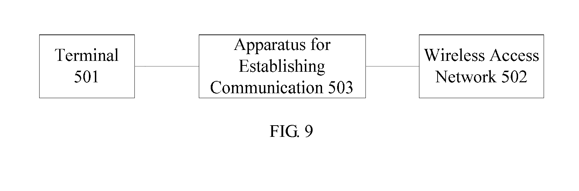

Fig. 9 is a structure diagram of a system for establishing communication of the present invention. The system includes a terminal 501, at least two wireless access networks 502 and an apparatus 503 for establishing communication. In which:
the apparatus for establishing communication is configured to determine, in at least two wireless access networks 502, a selection strategy of the wireless access network 502 which establishes communication with the terminal 501; select the wireless access network 502 which establishes communication with the terminal 501 according to the determined selection strategy; and establish communication between the terminal 501 and the wireless access network 502 according to the signal types supported by the wireless access network 502 and the terminal 501.

The functions of each module in the apparatus 503 for establishing communication have been described in detail in the above embodiments, and herein are omitted.

The embodiment of the present invention selects the wireless access network for establishing communication with the terminal according to the determined selection strategy, which limits the wireless access network for establishing communication with the terminal, thereby solving the problem in the prior art that the terminal can only passively establish communication with the wireless access network which can establish communication, and promoting the terminal to initiatively select the wireless access network to establish communication. In addition, the embodiment of the present invention establishes communication between the terminal and the wireless access network according to the signal types supported by the wireless access network and the terminal, so the terminal can establish communication with the wireless access network meeting the selection strategy.

A person skilled in the art shall appreciate that all or a part of steps for implementing the above method embodiments may be completed by instructing relevant hardware through a program that may be stored in a computer readable storage medium, and when being executed, the program performs the steps including the above method embodiments. The storage medium may include various mediums capable of storing program codes, such as ROM, RAM, magnetic disk and optical disk.

Finally to be noted, the above embodiments are just used to describe, rather than limiting, the technical solutions of the present invention. Although the present invention is described in detail with reference to the aforementioned embodiments, a person skilled in the art shall appreciate that the technical solutions of the aforementioned embodiments can be modified, or some technical features thereof can be equivalently replaced. Those modifications or replacements do not make essences of corresponding technical solutions deviate from the spirit and scope of the technical solutions of each embodiment of the present invention.

## Claims

1. A method for establishing communication, comprising:
determining a selection strategy of a wireless access network for establishing communication with a terminal;
selecting the wireless access network for establishing communication with the terminal according to the determined selection strategy; and
establishing communication between the terminal and the wireless access network according to the signal types supported by the wireless access network and the terminal.

2. The method according to claim 1, wherein when the selection strategy is to select a wireless access network currently having the strongest signal as the wireless access network for establishing communication with the terminal, selecting the wireless access network for establishing communication with the terminal according to the determined selection strategy specifically comprises:
obtaining the signal strengths of at least two signals received from the wireless access network, and selecting a signal having the maximum signal strength from the at least two signals; and
taking a wireless access network transmitting the signal having the maximum signal strength as the wireless access network for establishing communication with the terminal.

3. The method according to claim 1, wherein when the selection strategy is to select a wireless access network supporting a signal of the same type as the signal transmitted and received by the terminal as the wireless access network for establishing communication with the terminal, selecting the wireless access network for establishing communication with the terminal according to the determined selection strategy specifically comprises:
obtaining the signal types of at least two signals received from the wireless access network, and selecting a signal having the same signal type as the signal supported by the terminal from the at least two signals; and
taking a wireless access network transmitting the signal of the same type as the signal supported by the terminal as the wireless access network for establishing communication with the terminal.

4. The method according to claim 2, wherein establishing communication between the terminal and the wireless access network according to the signal types supported by the wireless access network and the terminal specifically comprises:
judging whether the terminal and the wireless access network are capable of communicating with each other;
when the terminal and the wireless access network cannot communicate with each other, converting a received first signal into a second signal supported by the communication counterpart, so that the terminal establishes communication with the wireless access network;
when the transmitting end of the received first signal is the terminal, the counterpart is the wireless access network; and
when the transmitting end of the received first signal is the wireless access network, the counterpart is the terminal.

5. The method according to claim 4, wherein the first signal is a 3G/LTE cellular signal, and the second signal is a WiFi signal; or
the first signal is a WiFi signal, and the second signal is a 3G/LTE cellular signal.

6. The method according to any of claims 1 to 5, wherein before determining the selection strategy of the wireless access network for establishing communication with the terminal, the method further comprises:
obtaining wired network signals transmitted by a fixed broadband interface;
converting the wired network signals into wireless network signals of at least two signal types; and
transmitting the wireless network signals so that they cover the wireless access network.

7. An apparatus for establishing communication, comprising:
a selection strategy determination module configured to determine a selection strategy of a wireless access network for establishing communication with a terminal;
a wireless access network determination module configured to select the wireless access network for establishing communication with the terminal according to the determined selection strategy; and
a communication establishment module configured to establish communication between the terminal and the wireless access network according to the signal types supported by the wireless access network and the terminal.

8. The apparatus according to claim 7, wherein when the selection strategy is to select a wireless access network currently having the strongest signal as the wireless access network for establishing communication with the terminal, the wireless access network determination module specifically comprises:
a maximum-signal-strength wireless access network obtaining unit configured to obtain the signal strengths of at least two signals received from the wireless access network, and select a signal having the maximum signal strength from the at least two signals; and
a first wireless access network determination unit configured to take a wireless access network transmitting the signal having the maximum signal strength as the wireless access network for establishing communication with the terminal.

9. The apparatus according to claim 7, wherein when the selection strategy is to select a wireless access network supporting a signal of the same type as the signal transmitted and received by the terminal as the wireless access network for establishing communication with the terminal, the wireless access network determination module specifically comprises:
a same-signal-type wireless access network obtaining unit configured to obtain the signal types of at least two signals received from the wireless access network, and select a signal having the same signal type as the signal supported by the terminal from the at least two signals; and
a second wireless access network determination unit configured to take a wireless access network transmitting the signal of the same type as the signal supported by the terminal as the wireless access network for establishing communication with the terminal.

10. The apparatus according to claim 8, wherein when the apparatus comprises the maximum-signal-strength wireless access network obtaining unit and the first wireless access network determination unit, the communication establishment module specifically comprises:
a communication capability judgment unit configured to judge whether the terminal and the wireless access network are capable of communicating with each other;
a signal conversion unit configured to convert a received first signal into a second signal supported by the communication counterpart when the terminal and the wireless access network cannot communicate with each other, so that the terminal establishes communication with the wireless access network;
when the transmitting end of the received first signal is the terminal, the counterpart is the wireless access network; and
when the transmitting end of the received first signal is the wireless access network, the counterpart is the terminal.

11. The apparatus according to claim 10, wherein the first signal is a 3G/LTE cellular signal, and the second signal is a WiFi signal; or
the first signal is a WiFi signal, and the second signal is a 3G/LTE cellular signal.

12. The apparatus according to any of claims 7 to 11, further comprising:
a wired network signal module configured to obtain wired network signals transmitted by a fixed broadband interface;
a signal conversion module configured to convert the wired network signals into wireless network signals of at least two signal types; and
a wireless network signal transmitting module configured to transmit the wireless network signals so that they cover the wireless access network.

13. A system for establishing communication, comprising a terminal, at least two wireless access networks and an apparatus for establishing communication, wherein:
the apparatus for establishing communication is configured to determine, in at least two wireless access networks, a selection strategy of a wireless access network for establishing communication with the terminal; select the wireless access network for establishing communication with the terminal according to the determined selection strategy; and establish communication between the terminal and the wireless access network according to the signal types supported by the wireless access network and the terminal.
